# EUROPEAN PATENT APPLICATION

(11) **EP 3 695 728 A1**
(43) Date of publication of application: **19.08.2020**
(21) Application number: 20158015.6
(22) Date of filing: 18.02.2020
(51) Int. Cl.: A23C 19/09, A23P 30/20, A23C 19/084, A23L 29/20, A23P 20/20

(54) **COATED CHEESE PRODUCTS**

(30) Priority: 18.02.2019 BE 201905106
(71) Applicant: Natural Pack bvba, 8020 Oostkamp (BE)
(72) Inventor: De Waele, Wim, 8020 Oostkamp (BE)
(74) Representative: Brantsandpatents bvba

(57) **Abstract**

The present invention relates to a dairy product provided with at least two layers, wherein a first layer is a flat dairy layer and wherein a second layer is a coating layer, characterised in that the dairy layer comprises a first gelling agent and a dairy component and the coating layer comprises a second gelling agent, a third gelling agent, a thickening agent, and a coating component. The invention also relates to a production method for the dairy product, the method comprising filling the flat dairy layer and the coating layer, wherein the flat dairy layer and the coating layer are preferably filled in the package, and wherein the filling is preferably carried out at a temperature of at least 70°C. The invention further relates to a package comprising the dairy product.

## Description

### TECHNICAL FIELD

The present invention relates to a dairy product provided with at least two layers, a package comprising the dairy product, and a method for producing the dairy product.

### PRIOR ART

Packaged dairy products are generally known in the prior art and are often used as fillings or sandwich fillings. However, such dairy products have a homogeneous taste and appearance. However, there is an ever-increasing demand for new combinations of tastes and textures. In particular concerning dairy products.

Such dairy products are known, for example, from US 6 814 996. US '996 describes a composite cheese product consisting of at least two discrete layers, wherein at least one layer comprises cheese, for example fresh cheese, and at least one layer comprises another edible composite. This edible composite may consist of a different cheese, vegetables, meat, fruit, nuts, herbs, or combinations thereof. Consumers, however, note that the composite cheese products described in US '996 are insufficiently cuttable. This poor cuttability is due to the inferior adhesion of the various discrete layers and the limited dimensional stability of the composite cheese products. More in particular, the different discrete layers do not adhere well to each other.

Such dairy products are also known from, for example, FR 2 959 102. FR '102 describes a cheese praline, or a composite cheese product, consisting of a cheese fraction on the one hand and a fruit or vegetable fraction on the other. A gelling agent is applied in the fruit or vegetable fraction. The cheese fraction is shaped in advance and is embedded in the fruit or vegetable fraction, in the form of, for example, a ball. Similar to US '996, consumers find that the cheese products obtained are not dimensionally stable and that both layers are not glued together well.

Finally, such dairy products are also known from EP 3 009 003. EP '003 describes a composite cheese product comprising a filling between two cheese layers. In contrast to US '996 and FR '102, the cheese layers are provided with a certain firmness by using a gelling agent, so that a dimensionally stable product can be obtained. However, the filling between the cheese layers of EP '003 is liquid rather than solid. Due to this liquid structure, the composite cheese product is not suitable for being cut, since the filling will leak during cutting. Moreover, it is not possible to provide the cheese product with a thicker filling without this filling starting to leak and without detracting from the dimensional stability of the composite cheese product.

The object of the present invention is to at least solve some of the above-mentioned problems or disadvantages. The object of the invention is to provide a method which overcomes these disadvantages.

### SUMMARY OF THE INVENTION

In a first aspect the invention relates to a dairy product provided with at least two layers, wherein a first layer is a flat dairy layer and wherein a second layer is a coating layer, wherein the dairy layer comprises a first gelling agent and a dairy component and the coating layer a second gelling agent, a thickening agent, and a coating component. The coating layer also comprises a third gelling agent and is provided with grooves with a groove depth of at least 5% of the depth of the coating layer. The use of specific gelling agents and thickening agents, among other things, ensures that the structural stability, the chemical stability, and the organoleptic properties are preserved. Furthermore, the dairy product is also provided as a tablet or bar.

Preferred embodiments of the dairy product are described in the dependent claims 2 up to and including 6 and 9 to 15. These preferred embodiments relate to the taste, texture, and ease of use of the dairy product.

In a second aspect, the invention relates to a production method, the method comprising filling the flat dairy layer and the coating layer, and wherein the filling preferably takes place at a temperature of at least 70°C.

In a third aspect, the invention relates to a package comprising the dairy product, the package further comprising an eating device, wherein this eating device is preferably a pricking tool with a proximal end and a distal end, and wherein the distal end of the pricking tool most preferably has an incision.

### DESCRIPTION OF THE DRAWlNGS

**Figure 1** shows a perspective view of the dairy product according to a preferred embodiment with grooves.
**Figure 2** shows a perspective view of the dairy product according to an alternative embodiment without grooves.
**Figure 3** shows a perspective view of the dairy product according to another alternative embodiment without grooves.

### DETAILED DESCRIPTION

The invention relates to a coated cheese product and a production method of this cheese product. More in particular, this invention relates to a coated cheese product comprising at least two layers, wherein a first layer is a flat cheese layer and wherein a second layer is a coating layer, wherein the cheese layer comprises a first gelling agent and the coating a second gelling agent and a thickening agent. The coating layer also further comprises a third gelling agent.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

The term 'thickening agent' is to be understood within the context of this disclosure as a high molecular substance that absorbs liquids, preferably water, and which subsequently swells and forms a viscous or colloidal solution.
In this document, 'a' and 'the' refer to both the singular and the plural, unless the context presupposes otherwise. For example, 'a segment' means one or more segments.

When the term 'around' or 'about' is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term 'about' or 'around' is used, is itself specifically disclosed.

The terms 'comprise', 'comprising', 'consist of', 'consisting of, 'provided with', 'include', 'including', 'contain', 'containing', are synonyms and are inclusive or open terms that indicate the presence of what follows, and which do not exclude or prevent the presence of other components, characteristics, elements, members, steps, as known from or disclosed in the prior art.

Quoting numerical intervals by endpoints includes all integers, fractions and/or real numbers between the endpoints, these endpoints included.

In a first aspect the invention relates to a dairy product provided with at least two layers, wherein a first layer is a flat dairy layer and wherein a second layer is a coating layer, wherein the dairy layer comprises a first gelling agent and a dairy component and the coating layer a second gelling agent, a thickening agent, and a coating component. The coating layer also further comprises a third gelling agent and is provided with grooves with a groove depth of at least 5% of the depth of the coating layer. The dairy product is also provided as tablet or bar.

The present dairy product is always provided with at least two layers, wherein a first layer is a flat dairy layer and wherein a second layer is a coating layer, wherein the dairy layer comprises a first gelling agent and a dairy component and the coating layer comprises a second gelling agent, a third gelling agent, a thickening agent, and a coating component. This specific combination results in a coated dairy product of superior quality. This superior quality is achieved by combining specific gelling agents and thickening agents to coordinate the structural properties of the cheese layer and the coating layer with each other. By employing a cheese layer and a coating layer with similar structural properties, one unexpectedly obtains a dairy product with superior bonding, dimensional stability, cuttability, and visual features. In particular, the gelling agent in both the dairy layer and the coating layer and the thickening agent in the coating layer are very important for the dairy layer and the coating layer to have similar structural properties. These similar structural properties were unexpectedly fundamental for good bonding to be achieved between the two layers. The inventors unexpectedly found that a synergy of the gelling agent and the thickening agent in the coating layer ensures that there is good bonding between the two layers. The visual features comprise, for example, the gloss of the dairy product and the colour contrast between the coating layer and the cheese layer. In a particular embodiment of the invention, the dairy layer can also comprise a thickening agent.

Furthermore, acceptance with respect to the sweetness, the bitterness, the taste, sympathy towards the texture, sympathy towards the product, and the taste of the product, when spread, was analysed by means of a descriptive sensory analysis and an acceptance test. In addition, the organoleptic properties and the chemical and structural stability of the dairy product were also determined by means of an organoleptic study and a stability study. The analyses described above are clarified in the examples.

Thanks to these extensive analyses and studies, the inventors found that there is enormous potential for new dairy products. In particular, dairy products that combine a hitherto unknown combination of tastes, colours, and textures. In particular, the invention relates to a coating component and a dairy component. Wherein this coating component comes from one or more characteristic products from the following list: vegetables, fruit, meat, nuts, spices, alcoholic and non-alcoholic drinks, honey, chocolate, 'speculoos' or combinations thereof and wherein this dairy component can both come from cow milk or goat milk, sheep milk, or vegetable milks such as, for example, soy milk. More in particular, uncured natural cheese is very suitable for the production of the coated dairy product.

The combination of the dairy layer with the coating layer, wherein this coating layer has a very characteristic taste, results in a dairy product that is qualitatively superior to the traditional, tasteless, and bland cheese tastes. In particular, the invention relates to a dairy product, wherein both the dairy layer and the coating layer have a smooth texture. Thanks to the smooth texture of both the coating layer and the dairy layer, both layers mix very well when consumed. In addition, sensory analyses show that thanks to this smooth texture, the consumer feels that the dairy product melts in his/her mouth. This is experienced as a superior texture compared to the texture of traditional dairy products.

In a second aspect, the invention relates to a production method, the method comprising filling the flat dairy layer and the coating layer, and wherein the filling preferably takes place at a temperature of at least 70°C.
Non-cured natural cheese is generally very soft and sticky, moreover it lacks the elasticity required to obtain a dimensionally stable flat dairy layer. In addition, this uncured natural cheese also becomes floury when it is heated to a temperature above 70°C. However, these temperatures are required for a good throughput to be obtained during the production process of the flat dairy layer. Moreover, this temperature is also important in order for the gelling agent to function properly. Since uncured natural cheese is very spreadable compared to other cheeses, this cheese will traditionally stick to the extrusion device or the filling device during the production of the flat dairy layer. Nevertheless, the inventors have observed that the addition of specific gelling agents, as well as various thickening agents, ensure that the flat dairy layer can be produced without the product sticking to the extrusion device or the filling device. In addition, it was also found that uncured natural cheese, supplemented with such gelling agents and thickening agents, retains its flavour for long periods of time at the high temperatures required for the extrusion process, so the supplemented natural cheese does not become floury. Moreover, the inventors also unexpectedly established that these additives make it easier to remove the final dairy product from a package.
According to an alternative embodiment of the invention, the extrusion of the flat dairy layer and the coating layer also comprises a step wherein the coating layer and the dairy layer are directly dosed into the package.

The direct extrusion of both the dairy layer and the coating layer into the package ensures that this package can be used as a mould for the final dairy product. This methodology has the advantage that a dairy product can be obtained in any form, without requiring additional steps in the production process. In addition, in this way the packaging ensures that a permanent mould is formed around the coating layer. This permanent mould has the advantage that no deformation of the coating layer is possible during transport or during storage of the dairy product.

According to an alternative embodiment of the invention, the extrusion of the flat dairy layer and the coating layer also comprises a step wherein the coating layer and the dairy layer are directly dosed onto a conveyor belt.

The direct extrusion of both the dairy layer and the coating layer onto the conveyor belt allows an operator to determine the width of the final dairy product as well as the layer thickness of the different layers. This by means of a modified extrusion nozzle and/or by means of a variable speed of the conveyor belt.
According to a preferred embodiment, the invention relates to a dairy product wherein the flat dairy layer has a layer thickness that is at least 1.5 times a layer thickness of the coating layer.

The inventors established by means of a sensory evaluation test that an average panel member preferred a layer thickness of the dairy layer that is at least 1.5 times the layer thickness of the coating layer. This ratio in layer thickness turned out to be optimal for a portion. For example, panel members indicated that with layer thicknesses of the dairy layer less than 1.5 times the coating layer, the coating product has a predominant taste. These panel members chose this ratio of layer thicknesses on the basis of a descriptive sensory analysis and an acceptance test, both of which are clarified in the examples.

According to a preferred embodiment, the invention relates to a dairy product wherein the dairy layer comprises the first gelling agent with a percentage by weight between 0.5 wt% and 1.5 wt%, preferably between 0.7 wt% and 1.3 wt%, and most preferably between 0.1 wt% and 1.0 wt%.

According to a further preferred embodiment, the invention relates to a dairy product wherein the coating layer comprises the second gelling agent with a percentage by weight between 0.05 wt% and 4 wt%, preferably between 0.07 wt% and 3.7 wt%, and most preferably between 0.1 wt% and 3.5 wt%.

According to a still further preferred embodiment, the invention relates to a dairy product wherein the coating layer comprises the thickening agent with a percentage by weight between 0.005 wt% and 1.5 wt%, preferably between 0.007 wt% and 1.3 wt%, and most preferably between 0.01 wt% and 1.0 wt%.

According to a still further preferred embodiment, the invention relates to a dairy product wherein the first gelling agent and the second gelling agent are selected from the group comprising gelatin, carrageenan, agar, alginate, pectin, and gellan.

As gelling agents for the dairy layer and the coating layer, it is possible to opt for either vegetable or animal gelling agents, or a combination of both. Examples of gelling agents comprised but are not limited to: gelatin, carrageenan, agar, alginate.

According to a preferred embodiment, the invention relates to a dairy product wherein the thickening agent is selected from the group consisting of locust bean gum, guar gum, xanthan, starch, cellulose, fibres, or gum arabic.

Vegetable thickening agents can be chosen as thickening agent for the coating layer. Examples of thickening agents comprised but are not limited to: locust bean gum and guar gum.

The optimum concentration of the first gelling agent, the second gelling agent, and the thickening agent was determined by an organoleptic study, a chemical stability study, and a structural stability study. These analyses are clarified in the examples.

The structural stability of the final dairy product was investigated in order to optimise the adhesion between the coating layer and the dairy layer, the dimensional stability, and the cutting resistance of the final dairy product, thereby obtaining a superior dairy product.

Good adhesion between the coating layer and the dairy layer is extremely important for the good dimensional stability of the product. This dimensional stability is of utmost importance so that the various layers do not mix during storage or during cutting of the product. Moreover, this good adhesion is important for the product to be easily removed from the package and for the dairy product to be easily traded. Good cutting resistance of the dairy product is important so that the user can cut the dairy product without the product losing its dimensional stability. In this way a compact snack can be obtained that can easily be speared by a consumer. Moreover, this cutting resistance is important so that the product does not stick to the cutting instrument.

These properties were investigated over various discrete temperature points and time points by means of an organoleptic study and a stability study. As a result, the inventors are certain that the superior properties of the dairy product, being the superior bonding, the dimensional stability, the cuttability, and the visual features, are preserved during storage.
Based on the organoleptic study, the chemical stability study, and the structural stability study, the panel members choose the following gelling agents: gelatin, carrageenan, agar, and alginate, and the following thickening agents: locust bean gum, and guar gum. In addition, concentrations of the first gelling agent with a percentage by weight between 0.5 wt% and 1.5 wt%, preferably between 0.7 wt% and 1.3 wt%, and most preferably between 0.1 wt% and 1.0 wt% were experienced as superior by the panel members. Analogously, concentrations of the second gelling agent with a percentage by weight between 0.05 wt% and 4 wt%, preferably between 0.07 wt% and 3.7 wt%, and most preferably between 0.1 wt% and 3.5 wt% were experienced as superior by the panel members. A concentration of the thickening agent with a percentage by weight between 0.005 wt% and 1.5 wt%, preferably between 0.007 wt% and 1.3 wt%, and most preferably between 0.01 wt% and 1.0 wt% was also considered superior by the panel members. Moreover, the inventors also unexpectedly observed that at these concentrations, the structural and chemical stability of the cheese product is best preserved over longer periods of time under poor storage conditions. For the purposes of this text, poor storage conditions are considered to be conditions that do not meet one or more parameters from the following group: long-term storage at 2°C to 8°C, long-term storage at 5% to 60% relative humidity, and long-term storage where the product is exposed to light for at least an hour every day. Concentrations within these ranges for the first and second gelling agents unexpectedly lead to similar structural properties. These similar structural properties are essential for good bonding between the two layers.
According to a preferred embodiment, the invention relates to a dairy product wherein the coating layer comprises one or more coating components selected from the group consisting of: vegetables, fruit, meat, nuts, herbs, alcoholic and non-alcoholic drinks, honey, chocolate, 'speculoos', or combinations thereof.

According to an embodiment of the invention, in addition to the first gelling agent, the dairy layer may also comprise one or more additional gelling agents, these gelling agents being selected from the group comprising gelatin, carrageenan, agar, and alginate.

According to an embodiment of the invention, in addition to the second gelling agent, the coating layer may also comprise one or more additional gelling agents, these gelling agents being selected from the group comprising gelatin, carrageenan, agar, and alginate.

By providing multiple gelling agents in both the coating layer and the dairy layer, the chemical and structural stability of the dairy product can be further refined.

According to an embodiment of the invention, in addition to the gelling agent, the coating layer may also comprise one or more additional thickening agents, these thickening agents being selected from the group consisting of locust bean gum, guar gum.

According to a preferred embodiment, the invention relates to a dairy product wherein the coating layer is provided with grooves.

So that a consumer can easily cut the dairy product, grooves are provided in the coating layer. These grooves indicate where the consumer must cut to obtain an optimal portion, which may comprise, for example, the ideal portion of an appetiser. Moreover, these grooves facilitate the cutting movement to divide the dairy product into different portions. In particular, these grooves are applied by using the package as a mould.

According to a preferred embodiment, the invention relates to a dairy product wherein the grooves of the dairy product have a groove depth, and wherein this groove depth is at least 5% of the depth of the coating.

The inventors found that a groove depth of at least 5% is needed to make the grooves easily visible visually. In addition, a groove depth of at least 5% ensures that a straight cutting surface is easily formed. Thanks to this straight cutting surface, the dairy product can be attractively presented as a snack.

According to a preferred embodiment, the invention relates to a dairy product wherein the flat dairy layer comprises one or more additives selected from the group consisting of hydrocolloids, in particular one or more from the group consisting of galactomannans, odorants, colorants, vitamins, minerals, dietary fibre, and flavourings.

According to a preferred embodiment, the invention relates to a dairy product wherein the layer thickness of the flat dairy layer is between 8 mm and 15 mm and the layer thickness of the coating layer is between 3 mm and 6 mm, preferably the layer thickness of the dairy layer is 10 mm and the layer thickness of the coating layer is 5 mm.

The inventor found that a 10 mm layer thickness of the dairy layer and a 5 mm layer thickness of the coating layer comprised the optimum dosage for an appetiser. In particular, the coating layer of this appetiser comprises grooves, which are provided by an extrusion and/or filling in the package. More in particular, these grooves have a groove depth of 1 mm. Even more in particular, the coating layer of this appetiser does not comprise any grooves. In a particular embodiment, both the dairy layer and the coating layer of the appetiser are directly extruded without grooves onto a conveyor belt.

According to an alternative embodiment, the invention relates to a dairy product wherein the flat dairy layer has a thickness between 3 mm and 8 mm and the coating layer has a thickness between 1 mm and 3 mm, preferably the layer thickness of the dairy layer is 5 mm and the layer thickness of the coating layer is 2 mm.

The inventor found that a 5 mm layer thickness of the dairy layer and a 2 mm layer thickness of the coating layer comprises the optimum dosage for sandwich fillings. In particular, the coating layer and the dairy layer are directly dosed onto a conveyor belt, after which the dairy product is vacuum-packed.

In a third aspect, the invention relates to a package comprising the dairy product, the package further comprising an eating device, wherein this eating device is preferably a pricking tool with a proximal end and a distal end, and wherein the distal end of the pricking tool most preferably has an incision. More preferably, the proximal end of the pricking tool comprises a cutting device.

By providing a pricking tool in the package, a user is always provided with an eating device and the dairy product can easily be consumed as a snack. By providing an incision on the distal end of the pricking tool, the pierced dairy product adheres better to the pricking tool so that the dairy product or a cut off portion of the dairy product cannot slide off the pricking tool.

According to a preferred embodiment, the second gelling agent, comprised by the coating layer, is agar. The inventor notes that agar in the coating layer is advantageous, since it prevents, among other things, sticking of the coating layer to a package. Adhesion of the coating layer is prevented in particular if the package is a plastic package. A further advantage of agar in the coating layer is an increase in the melting temperature of the coating layer. Consequently, the coating layer will melt away less rapidly when it is removed from a cold store and presented, for example at a room temperature of about 20°C. By increasing the melting point of the coating layer, the structural stability, i.e. the desired shape, of the dairy product is retained. By better shape retention of the coating layer better, a clear separation line is maintained, among other things, between the dairy layer and the coating layer when the dairy product is presented outside of a cold store. In addition, this prevents the grooves from melting away and/or clogging up when the dairy product is presented outside of a cold store.

Preferably, a mass fraction of the second gelling agent, preferably agar, in the coating layer is at least 0.01 m%. Such mass fractions do not melt with prolonged exposure to ambient temperatures. In addition, the inventor notes that such mass fractions are easily released from a package. Preferably, a mass fraction of the second gelling agent in the coating layer is at least 0.01 m% and at most 0.1 m%. Such mass fractions also provide a hardness of the coating layer that is perceived as pleasant by the consumer.

According to a preferred embodiment, the first gelling agent, comprised by the dairy layer, is agar. Analogously to agar in the coating layer, agar in the dairy layer prevents this dairy layer from melting away when the dairy product is presented outside of a cold store. Consequently, such embodiments are extremely suitable for long-term presentation during a party or reception.

Preferably, a mass fraction of the first gelling agent, preferably agar, in the dairy layer is at least 0.1 m%. Such mass fractions do not melt with prolonged exposure to ambient temperatures. In addition, the inventor notes that such mass fractions are easily released from a package. Preferably, a mass fraction of the first gelling agent in the dairy layer is at least 0.1 m% and at most 1.5 m%. Such mass fractions also provide a hardness of the dairy layer that is perceived as pleasant by the consumer.

According to a preferred embodiment, the coating layer further comprises a third gelling agent. Very preferably, the third gelling agent is gelatin. Such a coating layer is easy to shape. In addition, the inventor notes that gelatin in the coating layer results in superior adhesion to the dairy layer. Consequently, the dairy product can be removed from the package heavy-handedly, without the coating layer coming loose from the dairy layer. Since such an embodiment can be removed by from the package heavy-handedly, it is extremely suitable for use in large numbers at, for example, a party or reception.

Preferably, a mass fraction of the third gelling agent, preferably gelatin, in the coating layer is at least 1.0 m%. Such mass fractions provide superior adhesion between the coating layer and the dairy layer. Preferably, a mass fraction of the third gelling agent, preferably gelatin, in the coating layer is at least 1.0 m% and at most 2.0 m%. Such mass fractions also provide a hardness of the dairy layer that is perceived as pleasant by the consumer.

According to a preferred embodiment, the dairy product comprises a coating layer which furthermore also comprises a thickening agent. Very preferably, the thickening agent is guar gum. The inventor notes that guar gum is advantageous in the coating layer, since the guar gum ratio in the coating layer influences the viscosity strongly at temperatures higher than, for example, a cooling temperature of 3 or 4°C. By increasing the melting point of the coating layer, the structural stability, i.e. the desired shape, of the dairy product is retained. Furthermore, the inventor also notes that addition of guar gum in the coating layer results in a soft bite of the dairy product and in particular of the coating layer.

Preferably, a mass fraction of the thickening agent in the coating layer is at least 0.01 m% and at most 0.1 m%. Such mass fractions also provide a hardness of the coating layer that is perceived as pleasant by the consumer.

According to a particular further preferred embodiment, the dairy layer comprises a first gelling agent and the coating layer a second and third gelling agent and a thickening agent. Preferably, the first gelling agent is agar. More preferably, the second gelling agent is agar. Even more preferably, the thickening agent is guar gum. Even more preferably, the third gelling agent is gelatin. Such a combination in the present dairy product is stable, even when presented for a long period at a room temperature of, for example, 20°C. Consequently, the structural stability, i.e. the desired shape, of the dairy product is retained. Such a combination also results in a soft structure and bite. Furthermore, such a combination is also advantageous due to superior adhesion between the coating layer and the dairy layer. The inventors also note that a dairy product comprising such a combination is very easily detached from a package, in particular a plastic package. This makes the dairy product easy to present, since damage is prevented during removal from the package. This allows an attractive, smooth as well as shiny structure to be presented. Furthermore, the above composition also prevents sticking to a cutting instrument.

According to a particular preferred embodiment, the dairy product is provided in a tablet or a bar. A dairy product in a tablet form or a bar form is compact. Consequently, such a dairy product can easily be taken along, for example for use as a snack or lunch. Consequently, such packaged dairy product also takes up little space, for example in a store rack. When packaged in a primary packaging, such tablet-shaped or bar-shaped dairy product is also easily stackable in a secondary or tertiary packaging. In addition, such a dairy product can easily be presented as, for example, an appetiser. In this regard, it is extremely advantageous that the tablet or bar is provided with grooves. This makes it easy to divide the dairy product into portions.

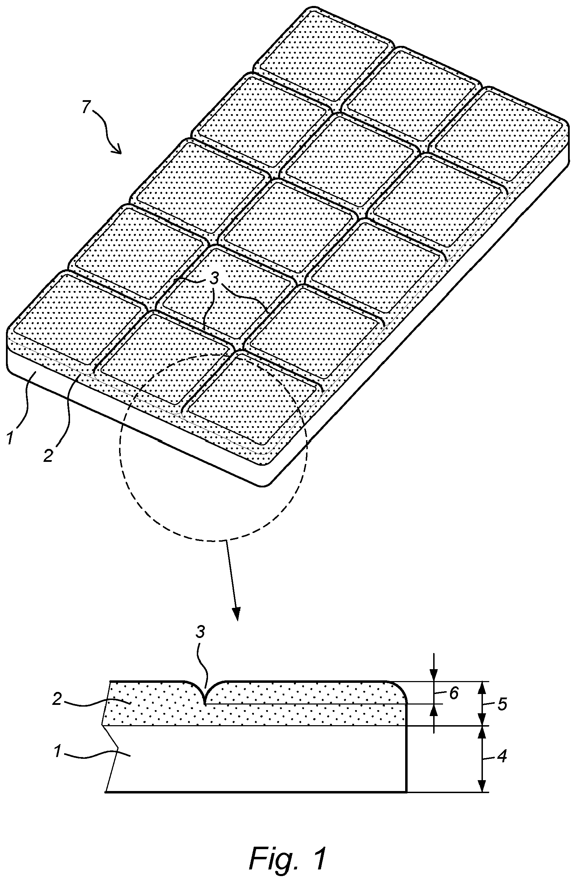

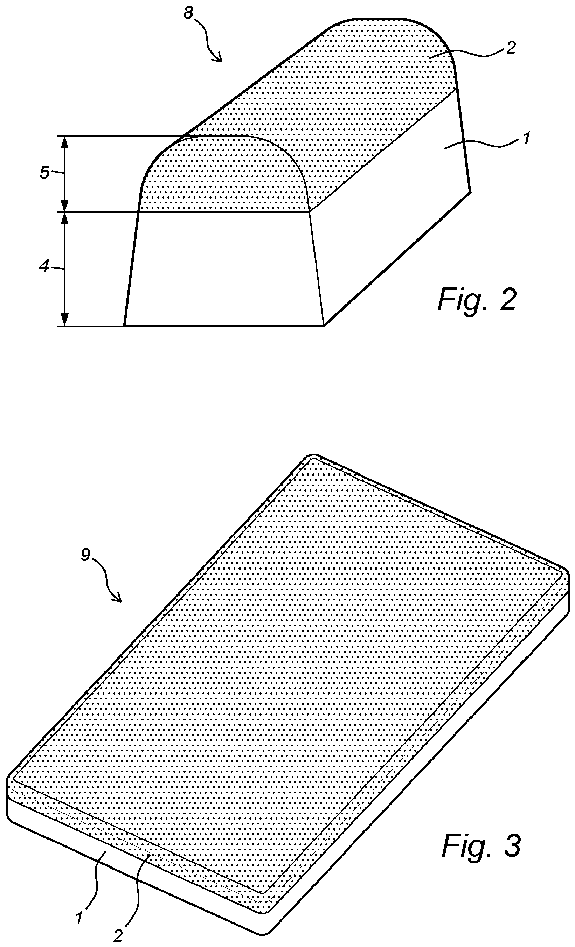

Preferably, a tablet-shaped dairy product is provided with a plurality of grooves in a lattice configuration. Such a configuration provides a plurality of easily detachable portions. In addition, such tablet can be divided into a plurality of bars. Such a tablet is shown, for example, in Figure 1. A bar is shown, for example, in Figure 2.
A dairy product is preferably manufactured by filling the different layers in a mould or package. Alternatively, the layers can be extruded. Filling is, however, advantageous with respect to extruding, since the layers will assume the shape of the mould or package better. In such a way, an attractive as well as stable structure is obtained. More in particular, a dairy product provided with grooves is preferably made by filling the various layers in a mould or package. As a result, the layers will take the form and dimensions of the protrusions present in the mould or package. In such a way, grooves are formed.

Preferably, a tablet-shaped or a bar-shaped dairy product comprises a flat dairy layer and a flat coating layer, wherein the flat dairy layer has a layer thickness between 8 mm and 15 mm and wherein the flat coating layer has a layer thickness between 3 mm and 6 mm, more preferably the layer thickness of the flat dairy layer is approximately 10 mm and the layer thickness of the coating layer is approximately 5 mm. Such dimensions provide an optimum ratio between the coating layer and the dairy layer. In addition, such a dairy product can be attractively presented. Figure 1 shows, for example, a dairy product in tablet form. A preferred embodiment of Figure 1 comprises the above dimensions. In addition, the dairy product is also provided with grooves, more in particular grooves in a grid pattern.

According to a preferred embodiment, a hardness of said coating layer is at least 0.01 N/mm². Such minimal hardness is required for good shape retention and an attractive presentation of the various layers. Preferably, a hardness of said coating layer is at most 0.03 N/mm². The hardness is determined by the method described herein.

According to a preferred embodiment, a hardness of said dairy layer is at least 0.045 N/mm². With a hardness of less than 0.045 N/mm², a visible compression of a dairy layer occurs. Preferably, a hardness of said dairy layer is at most 0.055 N/mm². The hardness is determined by the method described herein.

According to a preferred embodiment, an adhesion between said coating layer and said dairy layer is at least 0.02 N/mm². Preferably, an adhesion between said coating layer and said dairy layer is at most 0.05 N/mm². The adhesion is determined by the method described herein.

In what follows, the invention is described by way of non-limiting examples or figures illustrating the invention, and which are not intended to and should not be interpreted as limiting the scope of the invention.

The invention will now be described in more detail with reference to the following non-limiting examples or figures.

### EXAMPLES

The invention will now be further explained on the basis of the following example, without however being limited to this.

### EXAMPLE 1

The acceptance with respect to the sweetness, the bitterness, the taste, sympathy towards the texture, sympathy towards the product, and the taste of the product, when spread, were analysed by means of a descriptive sensory analysis and an acceptance test.

This descriptive sensory analysis and acceptance test were used to determine the sensory properties of the dairy product, more in particular the influence of the ratio of the different layer thicknesses on the taste was analysed.

Thirty panel members were selected for this purpose. These panel members were asked to evaluate various embodiments with variable layer thicknesses for sweetness intensity, bitterness intensity, deviant taste intensity, sweet aftertaste intensity, bitter aftertaste intensity, and texture, by means of an unstructured 100-point line scale.

Panel members were also asked to assess the acceptability of the product using a 9-point hedonic scale (1 = extreme aversion, 5 = neutral, 9 = extreme preference). These evaluations comprise assessments for acceptance of the sweetness, the bitterness, the taste, the sympathy towards the texture, the sympathy towards the product, and the taste of the product when spread.
Through these analyses, the inventors found, among other things, that the panel members prefer a layer thickness of the dairy layer that is at least 1.5 times the layer thickness of the coating layer. Moreover, these analyses unexpectedly demonstrated that, due to the smooth texture of the dairy product, the consumer feels that the dairy product melts in his/her mouth. This was experienced as a superior texture compared to the texture of traditional dairy products.

### EXAMPLE 2

The organoleptic properties as well as the chemical and structural stability of the dairy product was determined by an organoleptic study and a stability study. In particular, the influence of the different gelling agents and thickening agents on the structural and chemical stability as well as on the organoleptic properties was determined. To this end, different variations of the dairy product were produced, wherein each time a different concentration of the different gelling agents and thickening agents was used.

Thirty panel members were selected. These panel members were asked to evaluate various embodiments with variable gelling agents and thickening agents for sweetness intensity, bitterness intensity, deviant taste intensity, sweet aftertaste intensity, bitter aftertaste intensity, and texture, by means of an unstructured 100-point line scale. In addition, discrete variations in temperature were also provided, wherein the different variations of the dairy products were determined in each case (T1 = 5°C, T2 = 20°C, T3 = 30°C). This unstructured 100-point line scale had to be filled in by the different panel members at discrete time points (t0 = 0 days, t1 = 50 days, t2 = 70 days, t3 = 100 days, t4 = 150 days, t5 = 200 days). The cutting resistance of the dairy product was also analysed at each of these discrete time points.
The inventors found, among other things, that the panel members, on the basis of organoleptic properties, prefer a concentration of the first gelling agent for the dairy layer with a percentage by weight between 0.1 wt% and 1.0 wt%, prefer a concentration of the second gelling agent for the coating layer with a percentage by weight between 0.1 wt% and 3.5 wt%, and prefer a concentration of the thickening agent with a percentage by weight between 0.01 wt% and 1.0 wt%. The inventors also observed that at these concentrations the structural and chemical stability as well as the cutting resistance of the dairy product was best preserved. In addition, the panel members chose the following gelling agents: gelatin, carrageenan, agar, and alginate, and the following thickening agents: locust bean gum, and guar gum.

### EXAMPLE 3

This example relates to a production method for the dairy product, wherein the dairy product is used as an appetiser.

In a first step, the coating layer is produced. To this end, the various ingredients are initially weighed, mixed and possibly reduced, for example by means of a cutting instrument, until a flowing coating mixture is obtained. This flowing coating mixture is then heated to 90°C, after which the mixture is dosed into the bar package and then cooled in this bar package.

In a second step, the dairy layer is produced. To this end, the various ingredients are initially weighed, mixed and possibly reduced, for example by means of a cutting instrument, until a flowing dairy mixture is obtained. This flowing dairy mixture is then heated to 90°C, after which it is extruded into the bar package. Preferably, the flowing dairy mixture is filled.

After filling the coating layer and the cheese layer into the bar package, this package is vacuum sealed. Finally, the packaged dairy product is cooled.

The used bar package has a characteristic structured pattern. This characteristic shape of the package leaves grooves in the coating layer, which helps the consumer to cut the cheese bar into equal blocks.

### EXAMPLE 4

This example concerns a production method for the dairy product, wherein the dairy product is used as a sandwich filling. This dairy product is rectangular in cross-section and the dairy layer has a layer thickness of 5 mm and the coating layer has a layer thickness of 2 mm. Thanks to this shape, the dairy product can easily be cut to the desired size. This form in combination with the correct recipe also makes the dairy product very easy to sell.

In a first step, the dairy layer is produced. To this end, the various ingredients are initially weighed, mixed and possibly reduced, for example by means of a cutting instrument, until a flowing dairy mixture is obtained. Subsequently, this flowing dairy mixture is heated to 90°C, after which it is extruded into the dairy layer on a conveyor belt.

In a second step, the coating layer is produced and bonded to the dairy layer. For this purpose, a cooling step of the dairy layer is initially provided. The various ingredients are then weighed, mixed and possibly reduced, for example by means of a cutting instrument, into a flowing coating mixture. This flowing coating mixture is then heated to 90°C, after which the mixture is extruded onto the dairy layer. Finally, the formed dairy product is cooled, cut, and packaged.

The width of the final dairy product, as well as the layer thickness of the different layers is determined by the extrusion nozzle used and the speed of the conveyor belt.

### EXAMPLE 5

Example 5 describes preferred embodiments of the dairy product comprising a dairy layer with a first gelling agent and a coating layer with a second and third gelling agent. The coating layer also further comprises a thickening agent.

Examples of possible compositions of the dairy layer according to the current preferred embodiments include:

| **Example composition of dairy layer** | | |
|---|---|---|
| | **Dairy component** | **First gelling agent** |
| **1** | Uncured natural cheese | 0.5 wt% agar |
| **2** | Uncured natural cheese | 0.2 wt% agar |
| **3** | Uncured natural cheese | 0.7 wt% agar |
| **4** | Uncured natural cheese | 0.4 wt% agar |
| **5** | Uncured natural cheese | 1.0 wt% carrageenan |
| **6** | Cream cheese with cow's milk | 0.4 wt% agar |
| **7** | Cream cheese with goat's milk | 0.6 wt% agar |

Examples of possible compositions of the coating layer according to the current preferred embodiments include:

| **Example compositions coating layer** | | | | |
|---|---|---|---|---|
| | **Coating component** | **Second gelling agent** | **Third gelling agent** | **Thickening agent** |
| **10** | 200 g honey | 1.8 g of agar | 6 g of gelatin | 1.8 g of guar gum |
| **11** | 80 g chocolate spread | 1.5 g of agar | 4.5 g of gelatin | 1.5 g of guar gum |
| **12** | 4 g of instant coffee | 1.2 g of agar | 3.2 g of gelatin | 2.4 g of guar gum |
| **13** | 5 g of dried mint | 1.8 g of agar | 4 g of gelatin | 2.4 g of guar gum |
| **14** | 400g fig jam | 1.8 g of agar | 7.0 g of gelatin | 1.2 g of guar gum |
| **15** | 400 g red onion preserve | 3.3 g of agar | 8.62 g of gelatin | 1.2 g of guar gum |
| **16** | 240 g of banana | 3.3 g of agar | 1.5 g of gelatin | 3.3 g of guar gum. |

### EXAMPLE 6

Example 6 relates to a hardness of the coating layer and the dairy layer according to the present invention.

A hardness of the coating layer between 0.01 N/mm² and 0.03 N/mm² is extremely important for a good shape retention and, consequently, an attractive presentation of the different layers. In particular, such hardness is important with a bar-shaped product, such that it can be attractively presented. The inventors noted that when the hardness of a coating layer is less than 0.01 N/mm², the resulting coating layer does not retain its shape sufficiently during, for example, product presentation. Furthermore, the inventors note that a coating layer with a hardness higher than 0.03 N/mm² is perceived as less pleasant by a consumer. The inventors noticed that a coating layer with a hardness between 0.01 N/mm² and 0.03 N/mm² has a soft structure and bite and is therefore experienced as very pleasant by a consumer.

A hardness of the dairy layer between 0.045 N/mm² and 0.055 N/mm² is extremely important for good shape retention and, consequently, an attractive presentation of the various layers. The inventors noted that when the hardness of a dairy layer is less than 0.045 N/mm², there is visible compression of the dairy layer when it is connected on an upper side to a coating layer. In particular, such hardness is important with a bar-shaped product, such that it can be attractively presented. In addition, the inventors note that a dairy layer with a hardness between 0.045 N/mm² and 0.055 N/mm² still has a sufficiently soft structure and bite and is perceived as pleasant by a consumer.

Respectively, the present dairy layers comprise a composition of:

| **Preferred compositions** | |
|---|---|
| 1000 g cream cheese with cow's milk | 0.4 wt% agar |
| 1000 g cream cheese with goat's milk | 0.6 wt% agar |

Respectively, the present coating layers comprise a composition of:

| **Preferred compositions** | | | | |
|---|---|---|---|---|
| **Coating component** | **Second gelling agent** | **Third gelling agent** | **Thickening agent** | **Others** |
| 160 g fig jam | 0.7 g of agar | 4.8 g bovine gelatin | 0.5 g of guar gum | 80 g of water |
| 160 g orange jam | 0.7 g of agar | 4.8 g bovine gelatin | 0.5 g of guar gum | 80 g of water |
| 160 g honey | 1.4 g of agar | 4.8 g bovine gelatin | 1.4 g of guar gum | 80 g of water |
| 4 g of instant coffee | 1.2 g of agar | 4.8 g bovine gelatin | 1.8 g of guar gum | 156 g of water, 80 g of sugar |

The hardness of the layers below was measured at 20°C with a 'TA1 Texture Analyzer' from 'lloyd LF Plus Instruments' equipped with 'NEXYGENPlus material testing software', using the 'Compression Test' with a cylindrical probe with a contact surface of 30 mm², an extension of 5 mm and a speed of 120 mm/minute. The layers were tested at the respective thicknesses below.

| | **Implementation** | **Hardness (N)** | **Hardness (N/ mm²)** | **Average** | **Standard deviation** |
|---|---|---|---|---|---|
| 1 | Fig coating 5mm | 0.417 | 0.013909 | 0.619 | 0.173 |
| 2 | Fig coating 5mm | 0.57 | 0.019017 | | |
| 3 | Fig coating 5mm | 0.569 | 0.018981 | | |
| 4 | Fig coating 5mm | 0.89 | 0.029657 | | |
| 5 | Fig coating 5mm | 0.649 | 0.021618 | | |
| 1 | Orange coating 5 mm | 0.724 | 0.024128 | 0.741 | 0.031 |
| 2 | Orange coating 5 mm | 0.756 | 0.025209 | | |
| 3 | Orange coating 5 mm | 0.786 | 0.026211 | | |
| 4 | Orange coating 5 mm | 0.731 | 0.024370 | | |
| 5 | Orange coating 5 mm | 0.706 | 0.023524 | | |
| 1 | Honey coating 5 mm | 0.723 | 0.024091 | 0.657 | 0.069 |
| 2 | Honey coating 5 mm | 0.722 | 0.024056 | | |
| 3 | Honey coating 5 mm | 0.668 | 0.022254 | | |
| 4 | Honey coating 5 mm | 0.597 | 0.019892 | | |
| 5 | Honey coating 5 mm | 0.575 | 0.019169 | | |
| 1 | White onion coating 5 mm | 0.766 | 0.025526 | 0.791 | 0.063 |
| 2 | White onion coating 5 mm | 0.827 | 0.027551 | | |
| 3 | White onion coating 5 mm | 0.876 | 0.029192 | | |
| 4 | White onion coating 5 mm | 0.71 | 0.023655 | | |
| 5 | White onion coating 5 mm | 0.777 | 0.025915 | | |
| 1 | Cow's cheese 5mm | 1.498 | 0.049918 | 1.484 | 0.078 |
| 2 | Cow's cheese 5mm | 1.513 | 0.050433 | | |
| 3 | Cow's cheese 5mm | 1.561 | 0.052042 | | |
| 4 | Cow's cheese 5mm | 1.494 | 0.049784 | | |
| 5 | Cow's cheese 5mm | 1.352 | 0.045053 | | |
| 1 | Goat's cheese 5mm | 1.71 | 0.056993 | 1.578 | 0.098 |
| 2 | Goat's cheese 5mm | 1.455 | 0.048499 | | |
| 3 | Goat's cheese 5mm | 1.631 | 0.054359 | | |
| 4 | Goat's cheese 5mm | 1.57 | 0.052326 | | |
| 5 | Goat's cheese 5mm | 1.524 | 0.050783 | | |

### EXAMPLE 7

Example 7 relates to an adhesion between a flat coating layer and a flat dairy layer according to the present invention.

Adhesion of a coating layer and a dairy layer of at least 0.02 N/mm² is extremely important for a good shape retention and, consequently, for a good presentation of the various layers, in particular for a bar-shaped dairy product. After all, when an adhesion between the two layers becomes less than 0.02 N/mm², the inventors noticed that the coating layer sometimes became detached from the dairy layer during presentation. Preferably, the adhesion is at most 0.05 N/mm². The inventors note that in order to obtain an adhesion higher than 0.05 N/mm², the amount of gelling agent increases considerably, so that the hardness of the layers obtained increases and a harder bite and structure is obtained. This is perceived as less pleasant by a consumer. Gelatin in the coating layer ensures better adhesion between the coating layer and the dairy layer, so that the added amount of gelling agent can be limited and yet a sufficiently soft bite and structure can be obtained.

Respectively, the present dairy layers in the adhesion test comprise a composition of:

| **Preferred compositions** | |
|---|---|
| 1000 g cream cheese with cow's milk | 0.4 g of agar |

Respectively, the present coating layers in the adhesion test comprise a composition of:

| **Preferred compositions** | | | | |
|---|---|---|---|---|
| **Coating component** | **Second gelling agent** | **Third gelling agent** | **Thickening agent** | **Others** |
| 160 g fig jam | 0.7 g of agar | 4.8 g bovine gelatin | 0.5 g of guar gum | 80 g of water |
| 160 g orange jam | 0.7 g of agar | 4.8 g bovine gelatin | 0.5 g of guar gum | 80 g of water |
| 160 g honey | 1.4 g of agar | 4.8 g bovine gelatin | 1.4 g of guar gum | 80 g of water |
| 4 g of instant coffee | 1.2 g of agar | 4.8 g bovine gelatin | 1.8 g of guar gum | 156 g of water, 80 g of sugar |

The adhesion of the layers below was measured at 20°C with a 'TA1 Texture Analyzer' from 'lloyd LF Plus Instruments' equipped with 'NEXYGENPlus material testing software', using the 'Compression Test' with a cylindrical probe with a contact surface of 30 mm², an extension of 5 mm and a speed of 120 mm/minute. The layers were tested at the respective thicknesses below. The above device was positioned along a width axis of the dairy product such that a direction wherein the probe moves is parallel to the interface of the flat coating layer and dairy layer. Further, the probe was also positioned relative to a central portion of the coating layer. Both layers were considered adhesive as long as the coating layer is connected to the dairy layer. The layers were tested at the respective thicknesses below. It should further be noted that the length of the tested dairy products is 10 cm and the width 5 cm.

| | **Implementation** | **Resistance (N)** | **Adhesion (N/mm²)** | **Average** | **Standard deviation** |
|---|---|---|---|---|---|
| 1 | Fig adhesion 10 mm | 0.645 | 0.021511 | 0.781 | 0.266 |
| 2 | Fig adhesion 10 mm | 1.245 | 0.041511 | | |
| 3 | Fig adhesion 10 mm | 0.762 | 0.025394 | | |
| 4 | Fig adhesion 10 mm | 0.645 | 0.0215 | | |
| 5 | Fig adhesion 10 mm | 0.607 | 0.020221 | | |
| 1 | Orange adhesion 10mm | 0.696 | 0.02319 | 0.703 | 0.078 |
| 2 | Orange adhesion 10mm | 0.834 | 0.027815 | | |
| 3 | Orange adhesion 10mm | 0.7 | 0.023319 | | |
| 4 | Orange adhesion 10mm | 0.639 | 0.021293 | | |
| 5 | Orange adhesion 10mm | 0.647 | 0.021574 | | |
| 1 | Honey adhesion 10mm | 0.795 | 0.026506 | 0.922 | 0.310 |
| 2 | Honey adhesion 10mm | 1.388 | 0.046274 | | |
| 3 | Honey adhesion 10mm | 0.732 | 0.024406 | | |
| 4 | Honey adhesion 10mm | 0.62 | 0.020672 | | |
| 5 | Honey adhesion 10mm | 1.073 | 0.035755 | | |
| 1 | White onion adhesion 10mm | 0.963 | 0.032084 | 0.966 | 0.043 |
| 2 | White onion adhesion 10mm | 0.995 | 0.033174 | | |
| 3 | White onion adhesion 10mm | 1.023 | 0.034112 | | |
| 4 | White onion adhesion 10mm | 0.92 | 0.030668 | | |
| 5 | White onion adhesion 10mm | 0.931 | 0.031044 | | |

### EXAMPLE 8

Example 8 relates to descriptive sensory analysis of the dairy product.

The tested dairy products comprise a composition of:

| | **Test composition** | |
|---|---|---|
| T1 | 1000 g cream cheese with cow's milk | 0.05 wt% agar |
| T2 | 1000 g cream cheese with cow's milk | 0.4 g of agar |

| | **Test composition** | | | | |
|---|---|---|---|---|---|
| T1 | 160 g fig jam | 0.12 g of agar | 1.2 g bovine gelatin | 0.12 g guar gum | 80 g of water |
| T2 | 160 g fig jam | 0.7 g of agar | 4.8 g bovine gelatin | 0.5 g of guar gum | 80 g of water |

The hardness of the resulting dairy layer for test composition 1 is always less than 0.045 N/mm². The hardness of the resulting coating layer for test composition 1 is always less than 0.01 N/mm². The hardness of test composition 2 was discussed in Example 6.

For T1, a slight distortion of the structure of the dairy and coating layer was observed after 15 minutes. Furthermore, an adhesion was observed when cutting with a knife. For T2, no distortion was observed after 15 minutes.

For T1, a distortion of the structure of the dairy and coating layer was observed after 30 minutes by melting the bar shape away. Consequently, the line pattern of the bar shape also fades. Furthermore, a strong adhesion was observed when cutting with a knife. For T2, no distortion was observed after 30 minutes.

For T1, a very strong distortion of the structure of the dairy and coating layer was observed after 60 minutes due to the melting away of the bar shape. Consequently, the line pattern of the bar shape also fades. During the cutting, pieces of the dairy product stick completely to the knife. For T2, a slight distortion of the structure of the dairy and coating layer was observed after 60 minutes.

### DESCRIPTION OF THE DRAWING

In what follows, the invention is described by way of non-limiting examples or figures illustrating the invention, and which are not intended to and should not be interpreted as limiting the scope of the invention. In the figures, identical or corresponding parts are designated with the same reference signs. The invention will now be described in more detail with reference to the following non-limiting examples or figures.

Figure 1 illustrates a perspective view of the dairy product according to a preferred embodiment with grooves 7. Figure 2 illustrates a perspective view of the dairy product according to an alternative embodiment without grooves 8. Figure 3 illustrates a perspective view of the dairy product according to an alternative embodiment without grooves 8. Figures 1, 2, and 3 illustrate shapes of the dairy product with a flat dairy layer 1, wherein the layer thickness 4 of this flat dairy layer 1 is at least 1.5 times the layer thickness 5 of the coating layer 2.

The grooves 3 of the dairy product 7 have a groove depth 6 that is at least 5% of the layer thickness 5 of the coating layer 2. These grooves 3 indicate where the consumer must cut to obtain an optimum and attractively presentable portion. In addition, these grooves 3 facilitate the cutting movement to divide the dairy product into different portions. The embodiment 8 without grooves, as illustrated in Figures 2 and/or 3, is used as a sandwich filling. Since this sandwich filling does not require a nice presentation, no grooves were provided in the coating layer. Figure 3 describes an alternative embodiment 9 without grooves. In this embodiment, both the dairy layer and the coating layer are directly extruded onto a conveyor belt. This embodiment, for example, has the drawback that it cannot easily be divided into bite-sized portions. The grooves in the grid pattern shown in Figure 1 provide a solution in this regard.

As will be recognised by those skilled in the art, the innovative concepts described in the current application can be adapted and varied over a huge variety of applications. Nor is the scope of the patented concept limited by any of the examples given above.

## Claims

1. Dairy product provided with at least two layers, wherein a first layer is a flat dairy layer and wherein a second layer is a coating layer, wherein the dairy layer comprises a first gelling agent and a dairy component and the coating layer comprises a second gelling agent, a thickening agent, and a coating component, **characterised in that** the coating layer comprises a third gelling agent, wherein the coating layer is provided with grooves with a groove depth of at least 5% of the depth of the coating layer and wherein the dairy product is provided as a tablet or bar.

2. The dairy product according to claim 1, wherein the flat dairy layer has a layer thickness that is at least 1.5 times a layer thickness of the coating layer.

3. The dairy product according to claims 1 and 2, wherein the dairy layer comprises the first gelling agent with a percentage by weight between 0.5 wt% and 1.5 wt%, preferably between 0.7 wt% and 1.3 wt%, and most preferably between 0.1 wt% and 1.0 wt%.

4. The dairy product according to claims 1 to 3, wherein the coating layer comprises the second gelling agent with a percentage by weight between 0.05 wt% and 4 wt%, preferably between 0.07 wt% and 3.7 wt%, and most preferably between 0.1 wt% and 3.5 wt%.

5. The dairy product according to claims 1 to 4, wherein the coating layer comprises the thickening agent with a percentage by weight between 0.005 wt% and 1.5 wt%, preferably between 0.007 wt% and 1.3 wt%, and most preferably between 0.01 wt% and 1.0 wt%.

6. The dairy product according to claims 1 to 5, wherein the layer thickness of the flat dairy layer is between 8 mm and 15 mm and the layer thickness of the coating layer is between 3 mm and 6 mm, preferably the layer thickness of the dairy layer is 10 mm and the layer thickness of the coating layer is 5 mm.

7. A package comprising the dairy product according to any of the preceding claims 1 to 6 or 9 to 15, wherein the package further comprises an eating device, wherein this eating device is preferably a pricking tool with a proximal end and a distal end, and wherein the distal end of the pricking tool most preferably has an incision.

8. A production method for the dairy product according to any of the preceding claims 1 to 6 or 9 to 15, the method comprising filling the flat dairy layer and the coating layer, and wherein the filling preferably takes place at a temperature of at least 70°C.

9. The dairy product according to claims 1 to 6, wherein said second gelling agent is agar.

10. The dairy product according to claims 1 to 6 and 9, wherein said coating layer further comprises a third gelling agent and wherein said third gelling agent is gelatin.

11. The dairy product according to claims 1 to 6 and 9 to 10, wherein the thickening agent is guar gum.

12. The dairy product according to claims 1 to 6 and 9 to 11, wherein a mass fraction of the first gelling agent in the dairy layer is at least 0.1 m% and at most 1.5 m%, wherein a mass fraction of the second gelling agent in the coating layer is at least 0.01 m% and at most 0.1 m%, wherein a mass fraction of the third gelling agent in the coating layer is at least 1.0 m% and at most 2.0 m%, wherein a mass fraction of the thickening agent in the coating layer is at least 0.01 m% and at most 0.1 m%, wherein the first gelling agent is agar, wherein the second gelling agent is agar, wherein the third gelling agent is gelatin and wherein the thickening agent is guar gum.

13. The dairy product according to claims 1 to 6 and 9 to 12, wherein a hardness of said coating layer is at least 0.01 N/mm² and at most 0.03 N/mm².

14. The dairy product according to claims 1 to 6 and 9 to 13, wherein a hardness of said dairy layer is at least 0.045 N/mm² and at most 0.055 N/mm².

15. The dairy product according to claims 1 to 6 and 9 to 14, wherein an adhesion between said coating layer and said dairy layer is at least 0.02 N/mm² and at most 0.05 N/mm².
